# EUROPEAN PATENT APPLICATION

(11) **EP 3 128 758 A1**
(43) Date of publication of application: **08.02.2017**
(21) Application number: 15306280.7
(22) Date of filing: 07.08.2015
(51) Int. Cl.: H04Q 9/02, H02J 3/38, H03K 17/78

(54) **ACTUATOR CONTROL DEVICE FOR CONTROLLING AN ACTUATOR OF A POWER PLANT**

(71) Applicant: AREVA NP, 92400 Courbevoie (FR)
(72) Inventor: KLEIN, Andreas, 91056 ERLANGEN (DE)
(74) Representative: Lavoix

(57) **Abstract**

The present invention concerns an actuator control device (1) for controlling an actuator (3) of a power plant comprising: a plurality of input ports (10a - 10e, 104a - 104e, 106a-106e), each input port being associated to a channel (CH 0 - CH 4) and adapted to receive a control signal from a respective control system, each channel having a different priority; and a priority control circuit (100) including: a plurality of first solid state relays (K0.1, K1.1, K2.1, K3.1, K4.1, 200) comprising at least two poles, each input port (10a-10b, 104a - 104e) being connected to an input contact (A1) of a first solid state relay, wherein the poles of the plurality of first solid state relays are connected in such a way that an actuator command from a channel with a first priority supersede an actuator command from a channel with a second priority, wherein the second priority is lower than the first priority.

## Description

The present invention concerns an actuator control device for controlling an actuator of a power plant.

JP S58-188932 discloses a priority control switch using a solid state relay to drive different coils of a motor. The priority control switch comprises two symmetrical sub circuits. A load is associated to each sub circuit. If the input line of the first sub circuit is activated, the activation of the load associated to the second sub circuit is blocked and vice versa.

However, JP S58-188932 does not relate to the control of an actuator of a power plant. Further, the circuit of S58-188932 is only adapted to receive two input commands, each provided to act on a different load. Further, the input commands have the same priority, so that if on both entries a signal is applied, both signals are blocked by the respective other signal.

Further, in other solutions electromechanical relays are used. These circuits are usually used either closed to instrumentation and control systems or inside switch gear plug-in modules for the actuators.

Object of the invention is to provide priority control circuit, in which it is possible to receive commands from a plurality of channels, each having a different priority and which has improved characteristics.

According to the invention, a priority control circuit for controlling an actuator of a power plant is provided, comprising: a plurality of input ports, each input port being associated to a channel and adapted to receive a control signal from a respective control system, each channel having a different priority; and a priority control circuit including: a plurality of first solid state relays comprising at least two poles, each input port being connected to an input contact of a first solid state relay, wherein the poles of the plurality of first solid state relays are connected in such a way that an actuator command from a channel with a first priority supersede an actuator command from a channel with a second priority, wherein the second priority is lower than the first priority.

According to particular embodiments, the priority control circuit may comprise the following features, which may be combined in any technical feasible combination:
- the actuator control device comprises for each channel at least two input ports, a first input port adapted to receive a first actuator command, in particular to drive in a first direction or to switch an actuator on, and a second input port adapted to receive a second actuator command, in particular to drive the actuator in a second direction or to switch an actuator off, wherein the priority control circuit further comprises a first portion for generating the signal to drive the actuator according to the first actuator command, a second portion for generating the signal to drive the actuator according to the second actuator command, and a plurality of second solid state relays comprising at least two poles, each second input port being connected to an input contact of a second solid state relay and each first input port being connected to an input contact of a first solid state relay, wherein the poles of the plurality of first and second solid state relays are connected in such a way that in each of the first and second portions a control signal from a channel with a first priority supersedes a control signal form a channel with a second priority;
- the poles of the plurality of first and second solid state relays are connected in such a way that a first actuator command received by the first input port of a channel with a first priority supersedes a second actuator command received by a second input port of a channel with a second priority being lower than the first priority, and that a second actuator command received by a second input port of a channel with a first priority supersede a first actuator command received by a first input port of a channel with a second priority being lower than the first priority;
- a first pole of a first solid state relay is connected in series with a first pole of a second solid state relay of the same channel having a priority higher than the lowest priority;
- the first poles are normally closed contacts;
- first poles, in particular normally closed poles, of each first and/or second solid state relay of the channels having a priority higher than the lowest priority, and a first pole, in particular a normally open pole, of the first or second solid state relay of the channel with the lowest priority are connected in series to provide at least one series connection, in particular respectively one series connection for the first and second portion;
- second poles, in particular normally open poles, of each first and/or second solid state relay of the channels except the channels with the lowest priority and highest priority are connected to the series connection between the NC poles of the first and/or second solid state relays of the channel with the same priority and the NC poles of the first and second solid state relays of the channels with the next higher priority, and the second pole, in particular a normally open pole, of the first and/or second solid state relay of the channel with the highest priority is connected to the opposite end of the series connection with respect to the first pole of the first or second solid state relay of the channel with the lowest priority;
- the actuator control device further comprises at least one third solid state relay including a first pole for controlling the actuator, the input contact A1) of the third solid state relay is connected in series with the circuit formed by the poles of the first and/or second solid state relays;
- the third solid state array, which input contacts being connected in series with the poles of the first and/or second solid state relays in the first portion, comprises a second pole which is connected in series with the first poles of the first and/or second solid state arrays of the second portion and adapted to supersede the second actuator command, and the third solid state array, which input contacts being connected in series with the poles of the first and/or second solid state relays in the second portion, comprises a second pole which is connected in series with the first poles of the first and/or second solid state arrays of the first portion and adapted to supersede the first actuator command;
- the first, second and the third solid state relays are provided in a single housing;
- each of the first and second solid state relays comprises at least one pole with normally open contacts and at least one pole with normally closed contacts;
- the first, second and third solid state relays are OptoMOS or PhotoMOS relays, comprising at least one MOSFET.
- the actuator is at least a valve, a pump, a motor or the like.
- the actuator control device comprises at least 3 channels, in particular at least 5 channels, each channel having a different priority; and/or
- each of the solid state relays comprises at least two subrelays, the input contacts of the subrelays being connected in series, wherein, in particular the input contacts of each subrelays are bypassed by a zener diode.

So that the manner in which the above recited features of the present invention can be understood in detail, a more particular description of the invention, briefly summarized above, may be read by reference to embodiments. The accompanying drawings relate to embodiments of the invention and are described in the following:
Figure 1: shows a schematic diagram of a actuator control device according to an embodiment,
Figure 2: shows schematically an input portion of the electronic circuit of the priority control circuit of the actuator control system,
Figure 3: shows schematically a portion of an electronic circuit of a priority control circuit according to an embodiment,
Figure 4 shows schematically a check back portion of the electronic circuit of the priority control circuit according to an embodiment;
Figure 5 shows schematically a check back portion of the electronic circuit of the priority control circuit according to another embodiment;
Figure 6 shows schematically a drive portion of the actuator of the priority control circuit according to an embodiment;
Figure 7 shows schematically a drive portion of the actuator of the priority control circuit according to a further embodiment; and
Figure 8 shows schematically a solid state relay used in an embodiment according to the invention.

Priority control is necessary to arbitrate the access of more than one instrumentation and control system or function on one actuator. Each instrumentation and control system is a respective input channel acting on the actuator. Actual power plant designs require a priority control for more than two channels, for example a first channel for an operational instrumentation and control system, a second channel for a reactor protection system, and further channels for diverse protection systems respectively hardwired backup system, safety automation systems, and the like.

An actuator is for example a valve, a motor, a solenoid valve, a motor drive for pumps, fans, an open loop controlled actuator for isolation valve, plug valve, a closed loop controlled actuator for control valves.

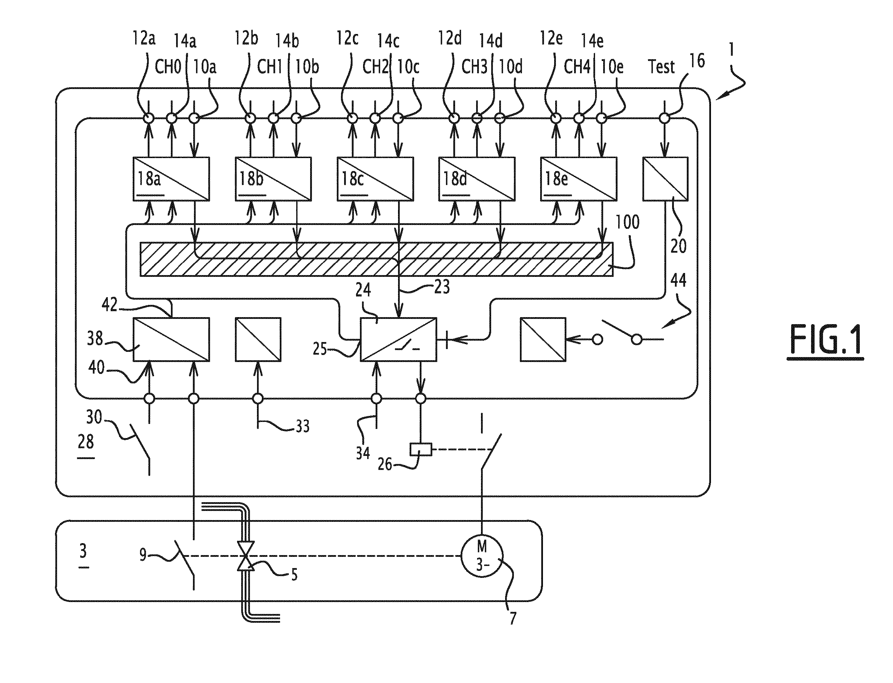

Each channel has a specific priority which is different to the other priorities. Figure 1 shows a flow chart of an actuator control device 1 having five channels CH 0 to CH 4 having each a different priority in ascending sequence. The control systems, for example the instrumentation and control system, are remote to the actuator control device 1. In other words the channel CH4 has the highest priority and the channel CH 0 has the lowest priority. For example channel CH 0 may be assigned to a non-safety instrumentation and control system, channel CH 1, to a component protection system, channel CH 2 to a safety automation system, channel CH 3 to a actuation system and channel CH 4 to a reactor protection system.

Figure 1 shows an actuator 3 comprising a valve 5 which is driven by a motor 7. Further, the actuator 3 is provided with check-back signal switches 9 to provide check-back signals to the actuator control device 1.

Each control system associated to a channel CH 0 to CH 4 provides one or more control signals or actuator commands to input terminals 10a to 10e of the actuator control system 1, for example to open and/or close a valve. These signals are provided using a 24V signal. Further, the actuator control device 1 provides check back signals and test signals back to each control system via check back signal output terminals 12a to 12e and test signal output terminals 14a to 14e.

The input terminals 10a to 10e for each channel are respectively connected to an isolation circuit 18a to 18e, which isolates and conditions the respective input and output signals and is therefore connected to the respective input terminals 10a to 10e and output terminals 12a to 12e and 14a to 14e. In particular, the isolation circuits 18a to 18e provide electrical isolation, for example using a galvanic insulation.

Further, the actuator control system 1 comprises, in an embodiment, a test input terminal 16. In an example, the actuator control system 1 comprises an isolation circuit 20 connected to the test input terminal 16.

The input signals are provided from the isolation circuits 18a to 18e to a priority control circuit 100, which will be detailed here-below. The priority control circuit 100 selects the actuator command with the highest priority and provides the selected actuator command 23 via an isolation circuit 24 to at least one main contactor 26 of a switch gear 28, which is part of the actuator control device 1. For example an actuator may need a plurality of contactors. A motor may only need one contactor. The switch gear 28 further provides a check back signal 30 and a power supply 33 to the actuator control system 1. Further, it provides the power supply 34 to the isolation circuit 24, so that the isolation circuit 24 is able to generate the appropriate actuator command to be provided to the main contactor 26. The main contactor 26 is adapted to switch the actuator, in particular the motor 7 on and off and/or to control the rotary direction of the actuators.

In an embodiment, the isolation circuit 20 for the test signal is connected to the isolation circuit 24. The isolation circuit 24 is adapted to inhibit the actuator command in case a test signal is applied to the isolation circuit 24. Thus, it is possible to test the priority control circuit 100 without acting on the actuator 3. Further, the isolation circuit 24 has an output port 25 to provide the output to the to the isolation circuits 18a to 18e, so as to provide the result of the test to the control systems of the respective channels CH 0 to CH 4. For example, the test signal includes whether the priority control circuit provides an open/on or a close/off actuator command.

The actuator control system 1 further comprises a check back signal isolator 38, which is adapted to isolate and condition the check back signals received from the switch gear 28 and the actuator 3. For example the check back signal isolator 38 includes a galvanic separation between the input ports 40 and the output ports 42 of the check back signal isolator 38. The output ports are, in particular connected to the isolation circuits 18a to 18e to provide the check back signals the control systems of the respective channels CH 0 to CH 4.

Further, the actuator control system 1 comprises one or more configuration switches 44, which enable a configuration of the actuator control device 1, for example whether an open or an close signal has a priority, whether an automatic hold is implemented, whether check back signals are used etc.

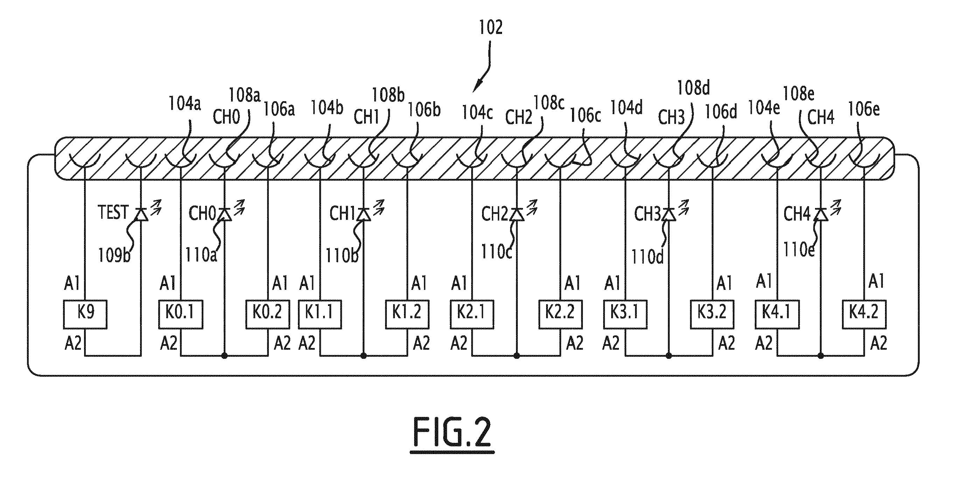

Figure 2 shows an input portion 102 of the priority control circuit 100. The input portion 102 includes for each channel CH 0 to CH 4, a first input port 104a to 104e for a first actuator command, for example an "open" or "ON" command, and a second input port 106a to 106e for a second actuator command, for example a "close" or "OFF" command. In an embodiment, the input signals are Further, the input portion 102 includes for each channel CH 0 to CH 4 a port 108a to 108e which is connected to the common signal return of the commands "open"/"on" resp. "close"/"off.

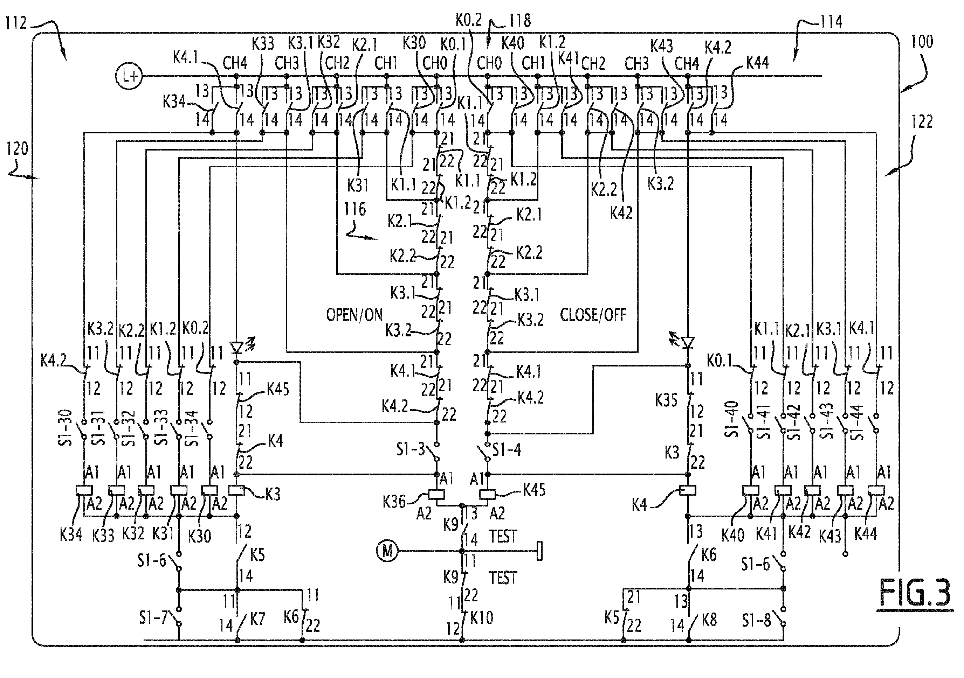

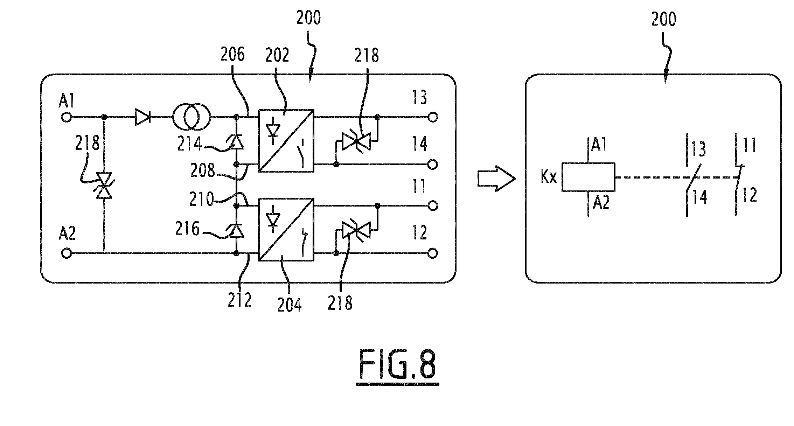

In the following, the present description refers to solid state relays. Each solid state relay, for example the solid state relays K0.1, K0.2, K1.1, K1.2, ... K4.1, K4.2 and K9 of the input portion 9, comprises respectively two input contacts A1, A2 and at least two poles, see Figure 3 having the contacts 11, 12, 13, 14, 21, 22, 31, 32. The poles may comprise normally open (NO) contacts or normally closed (NC) contacts. In the drawings, the input contacts have a rectangular box as a symbol and the poles have a switch symbol, each of them are provided with the same reference signs. For example, the solid state relay K0.1 has an input contact shown in figure 2 and two poles in Figure 3. The solid state relay K1.1 has the input contacts shown in figure 2 and four poles in Figure 3. An example of a configuration of a solid state relays is shown in more detail in Figure 8, which will be explained later in more detail. It should be noted that the relays are shown in the not activated state in the drawings.

For each channel CH 0 to CH 4 the first input port 104a to 104e is connected via the input contacts A1, A2 of the first solid state relay K0.1, K1.1, K2.1, K3.1, K4.1 to the port 108a to 108e of the respective channel. Accordingly, for each channel CH 0 to CH 4, the second input port 106a to 106e is connected via the input contacts A1, A2 of the second solid state relay K0.2, K1.2, K2.2, K3.2, K4.2 to the port 108a to 108e of the respective channel CH 0 to CH 4. Further, each channel comprises optionally a LED 110a to 110e, which is adapted to lighten, when either of the first and second solid state relay K0.1, K1.1, K2.1, K3.1, K4.1, K0.2, K1.2, K2.2, K3.2, K4.2 is activated. For that purpose the LED 110a to 110e is electrically connected in series between the input contact A2 of the respective relay K0.1, K1.1, K2.1, K3.1, K4.1, K0.2, K1.2, K2.2, K3.2, K4.2 and the port 108a to 108e.

According to an embodiment, the input portion 102 includes a port 109a for the test signal, which is connected to a solid state relay K9 being in series connection with an optional LED 109b and the port 109c. The port 109c is connected to the ground. The test signal may be a 24V signal in an embodiment.

Figure 3 shows other portions 112, 114 of the priority control circuit 100. The priority control circuit 100 comprises a first portion 112 for treating the priority of the first actuator commend, for example the "open" or "ON" command and a second portion 114 for treating the priority of the second actuator command, for example the "close" or "OFF" command. The first and second portions 112, 114 are designed symmetrically. It should be noted that the priority control circuit 100 may even include a third portion for treating a third actuator command. The general structure will be then more complex.

In the first portion 112 a normally open (NO) pole of the first solid state relay K0.1 is connected in series with the normally closed (NC) poles of the first and second solid state relay (SSR) K1.1, K1.2 of the second channel CH 1, the normally closed (NC) poles the first and second solid state relay K2.1, K2.2 of the third channel CH 2, the normally closed (NC) poles the first and second solid state relay K2.1, K2.2 of the third channel CH 2, the normally closed (NC) poles, the first and second solid state relay K3.1, K3.2 of the fourth channel CH 3, and the normally closed (NC) poles the first and second solid state relay K4.1, K4.2 of the fifths channel CH 4 in this sequence.

For each of the second to fifth channel CH1 to CH4, the NC poles of first and second solid state relays may be also arranged in the reverse order in this series connection 116. For example, the NC poles of the SSR K1.1 and K1.2 may be in an inverse sequence. In an embodiment, if a SSR for third actuator command would exist, the NC poles of this solid state array would be connected in series with the NC poles of the first and second solid state relays.

Further, one contact 13 of the NO pole of the first solid state relay K0.1 is connected to a voltage source L+.

Further, one contact 13 of the NO poles of the first solid state relays K1.1, K2.1, K3.1, K4.1 of the second to fourth channel CH 1 to CH4 is connected also to the voltage source L+ or another reference electric potential. The other contact 14 of the NO pole of the first solid state relays K1.1 of the second channel CH 1, is connected to the series connection between one of the NC poles of the first or the second solid state array K1.1, K1.2 of the second channel CH 1 and one of the NC poles of the first or the second solid state array K2.1, K2.2 of the third channel CH 2. The other contact 14 of the NO pole of the first solid state relays K2.1 of the third channel CH 2, is connected to the series connection 116 between one of the NC poles of the first or the second solid state array K2.1, K2.2 of the third channel CH 2 and one of the NC poles of the first or the second solid state array K3.1, K3.2 of the fourth channel CH 3. The other contact 14 of the NO pole of the first solid state relays K3.1 of the fourth channel CH 3, is connected to the series connection between one of the NC poles of the first or the second solid state array K3.1, K3.2 of the fourth channel CH 3 and one of the NC poles of the first or the second solid state array K4.1, K4.2 of the fifths channel CH 4. The other contact 14 of the NO pole of the first solid state relays K4.1 of the fifths channel CH 4, is connected to the series connection 116 behind, in view of the voltage source L+, one of the NC poles of the first or the second solid state array K4.1, K4.2 of the fifths channel CH 4. In other words, generally, the first contacts 13 of the NO poles of each channel is connected to the same reference potential, and the second contacts 14 of the NO poles of each channel except the channels CH 0 with the lowest priority and highest priority (CH 4)are connected to the series connection 116, 118 between the NC poles of the first and second SSRs of the channel with the same priority and the NC poles of the first and second SSRs of the channels with the next higher priority.

In other words, the NC poles of each solid state relay receiving an actuator command of a channel having a higher priority than the channel with the lowest priority, here CH 0, are connected in series with raising priority to the NO pole of the first solid state relay K0.1 of the channel CH 0.

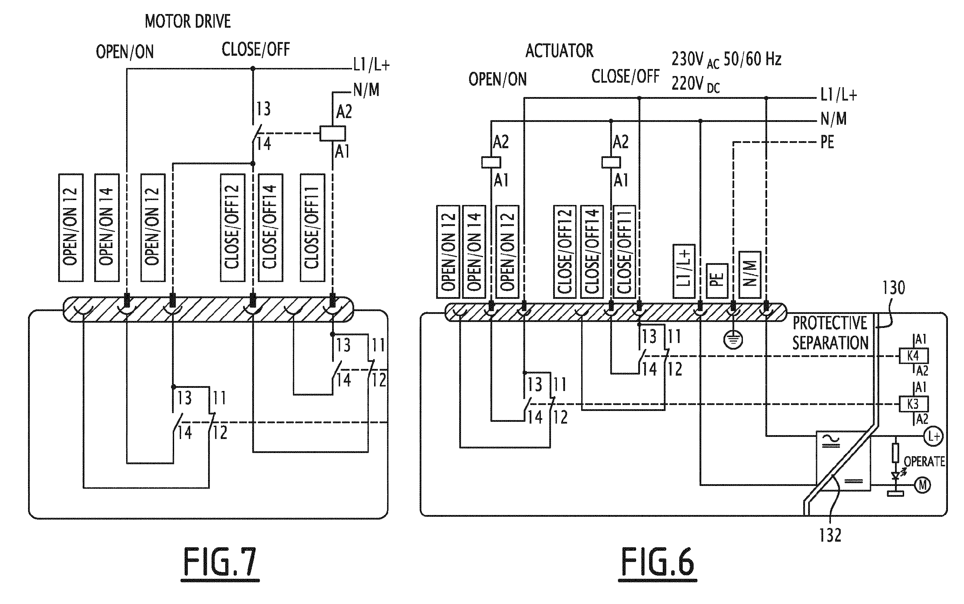

The series connection 116, 118 of the poles of the first and second solid state arrays it then connected to the input contacts of a third solid state relay K3 (K4 for the second portion). The third solid state relay K3, K4 includes several poles, namely to connect the actuator to a power supply, see for example Figures 7 and 6 with the contacts 11, 12, 13, 14 of the solid state relays 3 and 4, so that the actuator is driven in the respective direction. Further, the third solid state relay K3, K4 include a NC pole being connected between the NC poles of the first or the second solid state array K4.1, K4.2 of the channel with the highest priority, here the fifths channel CH 4, and the third solid state relay K3, K4 of the respective other portion 112, 114 of the priority control circuit.

Further, the circuit comprises respectively in the first and second portion 112, 114 a configuration switch S1-3, S1-4 being connected in parallel to the NC pole of the solid state relay K3; K4 between the NC poles of the first or the second solid state array K4.1, K4.2 of the channel with the highest priority, here the fifths channel CH 4, of the series connection 116, 118 and the input contact A1 of respective third solid state relay K3, K4. The configuration switches S1-3, S1-4 determine, which of the first and second portion 112, 114 has the priority about the respective other portion, i.e. in case both portions receive a command, the first portion the first actuator command and the second portion the second actuator command, which command supersedes the other. For example, the switch S1-3 short circuits the NC pole of the third solid state relay K4.

In an embodiment, the priority control circuit 100 includes optionally latching circuits 120, 122 for each of the actuator commands of each channel CH0 to CH4. The latching circuit 120, 122 comprises for each channel in each portion 112, 114 input contacts A1, A2 of a fourth solid state relay K30, K31, K32, K33, K34, K40, K41, K42, K43, K44, a configuration switch S1-30, S1-31, S1-32, S1-33, S1-34, S1-40, S1-41, S1-42, S1-43, S1-44, and a NC pole of the first or second solid state relays K0.1, K1.1, K2.1, K3.1, K4.1, K0.2, K1.2, K2.2, K3.2, K4.2, in a series connection. For example, for the first portion 112 relating to the first actuator command, a NC pole of the second solid state relay K0.2, K1.2, K2.2, K3.2, K4.2 relating to the second actuator command is used and vice versa. Further, the latching circuits 120, 122 comprise respectively one NO pole of the fourth solid state relay K30, K31, K32, K33, K34, K40, K41, K42, K43, K44 which is connected in parallel to the NO pole of the first solid state relay for the first portion 112 (or second SSR for the second portion 114) of the same channel CH0 to CH4. The second input contacts of the fourths SSRs K30, K31, K32, K33, K34, K40, K41, K42, K43, K44 are connected to the ground.

For example, relating to the first actuator command, the NO pole of the fourth solid state relay K30 of the first channel CH 0 is connected in parallel to the NO pole of the first solid state relay K0.1 of the first channel CH 0. Thus, if the configuration switch S1-34 is in the closed position, a short first actuator command on the first channel CH 0 closes the NO pole of the first solid state relay K0.1, then the input contacts of the fourth solid state relay K30 are activated and the NO pole of the fourth solid state relay K30 is closed. For example the NO pole of the fourth solid state relay K30 remains closed until a second actuator command on the first channel CH 0 activates the second solid state relay K0.2, so that the NC pole of the second solid state relay, which in series connection with the configuration switch S1-34 is opened.

In an embodiment, the solid state relay K9 of the test command comprises a NO pole and a NC pole, wherein one of the contacts of the poles is connected to the ground M. The NO pole of the solid state relay K9 is connected between the ground and the series connection 116, 118. Input contacts A1, A2 of a further solid state relay K36 are connected between the series connection 116 and the NO pole of the solid state relay K9. Further input contacts A1, A2 of a solid state relay K45 are connected between series connection 118 and the NO pole of the solid state relay K9. The solid state relays K36, K45 comprise respectively a NC pole which is respectively connected in series with the NC pole of the third solid state relay K3, K4 in parallel to the configuration switch S1-3, S1-4.

The NC pole of the solid state relay K9 is connected in series with optional poles of solid state relays K5, K6, K7, K8 relating to check back signals of the actuator or via configuration switches S1-5, S1-6, S1-7, S1-8 to the input contacts A2 of the third solid state relays K3, K4, and, if existing, the second input contacts of the fourths SSRs K30, K31, K32, K33, K34, K40, K41, K42, K43, K44. Thus, when a test signal is applied to the terminal 16, 109a, the third solid state relays K3, K4 are not any more activated when a first or second actuator signal is applied one of the input terminals associated to one of the channels CH 0 to CH 4. Thus, the priority control circuit 100 can be tested without moving the actuator 3.

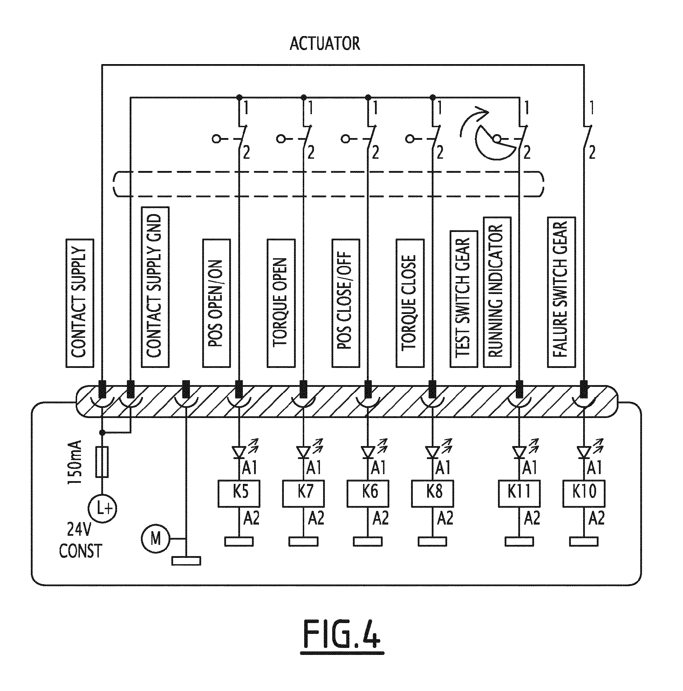

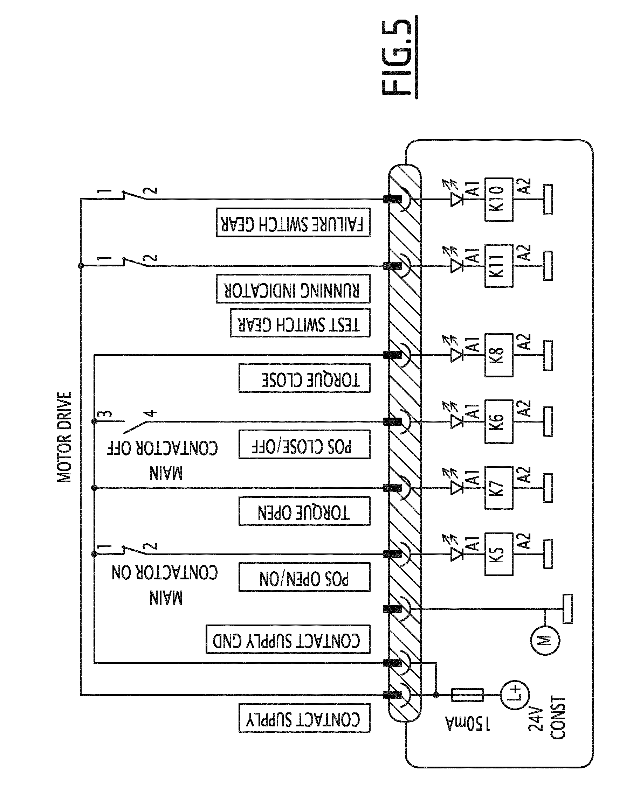

Figures 4 and 5 show the generation of the different check back signals of general actuator (Figure 4) and a motor (Figure 5). The actuator comprises six different check back signals, namely open position or ON, torque open, close position or OFF, close torque, test switchgear and failure switchgear. Each of the different check back signals are connected via an LED to respective input contact of a respective solid state relay K5, K6, K7, K8, K10 and K11. The respective poles can be found in Figure 3 between the input contact A2 of the third solid state relay K3, K4 and the ground M. Also the motor drive as a specific actuator has the same check back signals. The check back signals may be overrules with the configuration switches S1-5, S1-6, S1-7 and S1-8 as it can be seen from Figure 3, in case that they are not needed. The number of check back signals is not limited to the one disclosed in the Figures. The actuator control device can include more or less check back signals. Thus, according to an embodiment, the check back signals may interrupt the actuation of the third SSR K3 and/or K4.

Figures 6 and 7 shows the activation of a generic actuator and a motor drive using the third solid state relays K3 (for the first actuator command) and K4 (for the second actuator command). The actuator control system 1 comprises a protective separation 130 between the priority control circuit 100, which operates usually with a low voltage direct current, for example with a voltage below 50 V, in particular 24 V, and a higher voltage circuit portion, for example with voltages above 100 V, in particular 110 or 220 V for driving the actuator or the motor. For that purpose, an isolated power source 132 is provided.

The priority control circuit 100 functions as follows. If a first actuator signal is coming from the control system associated with the first channel CH 0, the solid state relay (SSR) K0.1 is activated. The contacts 13, 14 of the NO pole of the SSR K0.1 are closed and the SSR K3 is activated. Then the actuator is respectively activated, as it can be seen from the circuit in Figures 6 and 7, for example the actuator can be opened. If the latching is activated, i.e. the configuration switch S1-34 is closed, the NO pole of SSR K30 is closed and the SSR K3 remains activated, and therefore the power supply to the actuator. If the actuator reaches a final open position the NO pole of the SSR K5 is opened, due to the deactivation of the SSR K5. Then, the SSR K3 is deactivated.

If, during the application of the first actuator command, a second actuator command is applied to a channel CH 0, i.e. the SSR K0.2 is activated. Then, it depends on the settings of the configuration switches S1-3 and S1-4 whether the second actuator command overrules the first actuator command. For example, if the configuration switch S1-3 is closed and the configuration switch S1-4 is open, the first actuator command overrules the second actuator command, as the NC pole of SSR K3 is opened due to the activation of SSR K3. Thus, the third SSR K4 cannot be activated any more.

If, in another case, a second actuator command is applied to the third channel CH2, the SSR K2.2 is activated. Thus, the NC poles in the series connections 116 and 118 are opened. Immediately, the third SSR K3 is deactivated and the SSR K4 is activated, so that the actuator is operated in the reverse direction. The first actuator command applied to channel CH 0 is also overruled if a first actuator command is applied to the channel CH2. As it can be seen, the channels with a higher priority overrule the channels with a lower priority.

When a testing signal is applied to terminal 16, 109a, the SSR K9 is activated and the SSR K3, K4 are disconnected from the priority control circuit 100. In other words, when a first actuator command is applied to one of the channels, only the SSR K35 is activated. The same applies if a second actuator command is applied, then the SSR K45 is activated. Some of the poles of the SSRs K35 and K45 are connected, as it can be seen from figure 1 to the isolation circuits 18a to 18e, so that the test signal is provided back to the control systems associated to the channels CH 0 to CH 4. Thus, the priority control circuit 100 and/or the actuator control system 1 could be tested.

Figure 8 shows a solid state relay (SSR) 200 used in the priority control circuit 100 or actuator control system 1 according to the invention. Typically, the SSR 200 uses a constant power supply for input signals to maintain the stable operation of the optical inputs, even for lower input voltages, for example due to a voltage drop of a long cable. For example the SSR may be activated using a low voltage source, for example with a voltage below 50V DC. In a typical embodiment the voltage is 24V. On the right side of Figure 8 an electromechanical equivalent of the SSR is shown comprising the input contacts A1, A2 and the contacts of the poles 11, 12, 13, 14.

The solid state relay 200 of Figure 8 comprises two sub solid state relays 202, 204. In other embodiments, the solid state relay 200 may even comprise more than two sub solid state relays 202, 204, for example three, four, five or more sub solid state relays 202, 204.

The first sub solid state relay 202 with input contacts 206, 208 and the second sub solid state relay 204 with the input contacts 210, 212 are connected in a series connection. Thus, both sub solid state relays 202, 204 are adapted to be activated concurrently.

In order to prevent a total failure of a solid state relay due to an open control input of one sub solid state relay 202, 204, all input contacts 206, 208, 210, 212 are bypassed by zener diodes 214, 216.

The inputs and outputs are protected against transient overvoltages, for example using transient voltage suppressor diodes 218. Further, the inputs are additionally protected against polarity reversal, for example using diodes.

According to the invention, a priority control circuit is provided which needs less space than systems with electromechanical relays. Further, it is possible to accommodate the priority control circuit in a switchgear plug-in module. Further, three or more, for example five different channels can be connected to the priority control circuit to access a single actuator. Further, the priority control circuit comprises an interface for position and torque switches and other check backs form the switch gear, actuator, and main contactors.

In a typical embodiment, outputs for direct control of contactors with nominal voltages up to 120/230 V_{AC} and 110/220 V_{DC} can be provided. Further a wide range power supply for nominal voltages of 120/230 V_{AC} and 110/220 V_{DC} can be provided

## Claims

1. Actuator control device (1) for controlling an actuator (3) a power plant comprising:
a plurality of input ports (10a - 10e, 104a - 104e, 106a-106e), each input port being associated to a channel (CH 0 - CH 4) and adapted to receive a control signal from a respective control system, each channel having a different priority; and
a priority control circuit (100) including: a plurality of first solid state relays (K0.1, K1.1, K2.1, K3.1, K4.1, 200) comprising at least two poles, each input port (10a - 10b, 104a - 104e) being connected to an input contact (A1) of a first solid state relay, wherein the poles of the plurality of first solid state relays are connected in such a way that an actuator command from a channel with a first priority supersede an actuator command from a channel with a second priority, wherein the second priority is lower than the first priority.

2. Actuator control device according to any one of the preceding claims, comprising for each channel at least two input ports (104a - 104e, 106a-106e), a first input port (104a - 104e) adapted to receive a first actuator command, in particular to drive in a first direction or to switch an actuator on, and a second input port (106a - 106e) adapted to receive a second actuator command, in particular to drive the actuator in a second direction or to switch an actuator off, wherein the priority control circuit (100) further comprises a first portion (112) for generating the signal to drive the actuator according to the first actuator command, a second portion (114) for generating the signal to drive the actuator according to the second actuator command, and a plurality of second solid state relays (K0.2, K1.2, K2.2, K3.2, K4.2) comprising at least two poles, each second input port (10a - 10e, 106a-106e) being connected to an input contact (A1) of a second solid state relay and each first input port (104a - 104e) being connected to an input contact (A1) of a first solid state relay (K0.1, K1.1, K2.1, K3.1, K4.1), wherein the poles of the plurality of first and second solid state relays are connected in such a way that in each of the first and second portions (112, 114) a control signal from a channel with a first priority supersedes a control signal form a channel with a second priority.

3. Actuator control device according to claim 2, wherein the poles of the plurality of first and second solid state relays are connected in such a way that a first actuator command received by the first input port (104a - 104e) of a channel with a first priority supersedes a second actuator command received by a second input port (106a - 106e) of a channel with a second priority being lower than the first priority, and that a second actuator command received by a second input port of a channel with a first priority supersede a first actuator command received by a first input port of a channel with a second priority being lower than the first priority.

4. Actuator control device according to claim 3, wherein a first pole of a first solid state relay is connected in series with a first pole of a second solid state relay of the same channel (CH 1 - CH 4) having a priority higher than the lowest priority (CH 0).

5. Actuator control device according to claim 4, wherein the first poles are normally closed contacts.

6. Actuator control device according to the preceding claims, wherein first poles, in particular normally closed poles, of each first and/or second solid state relay of the channels (CH 1 - CH 4) having a priority higher than the lowest priority (CH 0), and a first pole, in particular a normally open pole, of the first or second solid state relay of the channel (CH 0) with the lowest priority are connected in series to provide at least one series connection (116, 118), in particular respectively one series connection for the first and second portion (112, 114).

7. Actuator control device according to claim 6, wherein second poles, in particular normally open poles, of each first and/or second solid state relay of the channels (CH 1 - CH 3) except the channels (CH 0, CH 4) with the lowest priority and highest priority (CH 4) are connected to the series connection (116, 118) between the NC poles of the first and/or second solid state relays of the channel with the same priority and the NC poles of the first and second solid state relays of the channels with the next higher priority, and the second pole, in particular a normally open pole, of the first and/or second solid state relay (K4.1, K4.2) of the channel with the highest priority is connected to the opposite end of the series connection (116, 118) with respect to the first pole of the first or second solid state relay (K0.1, K0.2) of the channel with the lowest priority (CH 0).

8. Actuator control device according to any one of the preceding claims, further comprising at least one third solid state relay (K3, K4) including a first pole for controlling the actuator (3), the input contact (A1) of the third solid state relay (K3, K4) is connected in series with the circuit formed by the poles of the first and/or second solid state relays (K0.1, K0.2, ...K4.2).

9. Actuator control device according to claim 7, when dependent on claim one of the claims 2 to 6, wherein the third solid state array (K3), which input contacts (A1) being connected in series with the poles of the first and/or second solid state relays in the first portion (112), comprises a second pole which is connected in series with the first poles of the first and/or second solid state arrays of the second portion (114) and adapted to supersede the second actuator command, and
the third solid state array (K4), which input contacts (A1) being connected in series with the poles of the first and/or second solid state relays in the second portion (112), comprises a second pole which is connected in series with the first poles of the first and/or second solid state arrays of the first portion (114) and adapted to supersede the first actuator command.

10. Actuator control device according to any one of the preceding claims, wherein the first, second and the third solid state relays are provided in a single housing.

11. Actuator control device according to any one of the preceding claims, wherein each of the first and second solid state relays comprises at least one pole with normally open contacts and at least one pole with normally closed contacts.

12. Actuator control device according to any one of the preceding claims, wherein the first, second and third solid state relays are OptoMOS or PhotoMOS relays, comprising at least one MOSFET.

13. Actuator control device according to any one of the preceding claims, wherein the actuator is at least a valve, a pump, a motor or the like.

14. Actuator control device according to any one of the preceding claims comprising at least 3 channels, in particular at least 5 channels, each channel having a different priority.

15. Actuator control device according to the preceding claims, wherein each of the solid state relays comprises at least two subrelays (202, 204), the input contacts of the subrelays being connected in series, wherein, in particular the input contacts of each subrelays are bypassed by a zener diode (214, 216).
